# EUROPÄISCHE PATENTSCHRIFT

(11) **EP 1 900 658 B1**
(45) Veröffentlichungstag und Bekanntmachung des Hinweises auf die Patenterteilung: **06.07.2011**
(21) Anmeldenummer: 06019378.6
(22) Anmeldetag: 15.09.2006
(51) Int. Cl.: B65G 47/64, B21D 43/22, B65G 57/112, B65G 57/32, B65G 47/90

(54) **Vorrichtung und Verfahren zum Ablegen von Werkstückstapeln auf einer Fördereinrichtung**
Apparatus and method for depositing stacked articles on a conveyor
Appareil et procédé de pose de piles d'articles sur un transporteur

(43) Veröffentlichungstag der Anmeldung: 19.03.2008
(73) Patentinhaber: Ligmatech Automationssysteme GmbH, 09638 Lichtenberg (DE)
(72) Erfinder: Höppner, Gert, 09638 Lichtenberg (DE); Saß, Bodo, 09638 Lichtenberg (DE)
(74) Vertreter: HOFFMANN EITLE

(56) Entgegenhaltungen:
- EP-A- 0 627 372
- WO-A-01/26971
- DE-A1- 10 356 563

## Beschreibung

### Technisches Gebiet

Die Erfindung betrifft eine Vorrichtung und ein Verfahren zum Ablegen von Werkstückstapeln auf einer Fördereinrichtung, mit einer Zufuhreinrichtung zum bevorzugt kontinuierlichen Zuführen von Werkstücken und einer Umsetzeinrichtung zum Aufnehmen eines in einer Stapeleinrichtung gebildeten Werkstückstapels und Absetzen des Werkstückstapels auf einer Fördereinrichtung.

### Stand der Technik

Plattenförmige Werkstücke wie beispielsweise Möbelfronten, Korpusteile, Paneele, Isolier- bzw. Bauplatten oder dergleichen werden nach deren Herstellung zum Zwecke des Transports und/oder der Lagerung gestapelt und/oder in geeignete Behälter wie Kartons, Kisten etc. verpackt. Zum Einbringen der plattenförmigen Werkstücke in die entsprechenden Behälter ist es bekannt, die Werkstücke zu einer Beladevorrichtung zu fördern, welche die Werkstücke in die Behälter ablegt. So ist in der DE 44 04 744 C1 eine Einlegestation für auf einem Produktionsband ankommende Artikel offenbart, die einen Umsetzer mit Saug-, Schiebe-oder Greiforganen zum Einlegen der Artikel in ein Behältnis besitzt.

Um die Anzahl der Umsetz- bzw. Einlegevorgänge zu vermindern, werden häufig zunächst am Ende eines Produktionsbandes Werkstückstapel gebildet, die dann als Ganzes durch einen Umsetzer aufgenommen und dann auf einer Fördereinrichtung oder in einer Verpackung abgelegt werden. Während des Stapelbildungvorganges kann kein Umsetz- bzw. Einlegevorgang durchgeführt werden, so dass der entsprechende Umsetzer ungenutzt bleibt, was zu einer begrenzten Kapazität der Gesamtvorrichtung führt.

Ferner offenbart die EP 0 627 372 A1 eine Vorrichtung nach dem Oberbegriff von Anspruch 1.

### Darstellung der Erfindung

Es ist daher Aufgabe der Erfindung, eine Vorrichtung und ein Verfahren zum Ablegen von Werkstückstapeln auf einer Fördereinrichtung bereitzustellen, die einen zügigen und störungsfreien Förderbetrieb ermöglichen.

Diese Aufgabe wird erfindungsgemäß durch eine Vorrichtung mit den Merkmalen von Anspruch 1 und ein Verfahren mit den Merkmalen von Anspruch 8 gelöst. Besonders vorteilhafte Weiterbildungen der Erfindung sind in den Unteransprüchen angegeben.

Der Erfindung liegt der Gedanke zugrunde, den Stapelbildungsvorgang und den Umsetzvorgang zu entkoppeln. Zu diesem Zweck ist bei einer Vorrichtung der eingangs genannten Art vorgesehen, dass sie mindestens zwei Stapeleinrichtungen jeweils zum Bilden eines Werkstückstapels, der mindestens zwei übereinander gestapelte Werkstücke aufweist, und eine Verteilungseinrichtung, die eingerichtet ist, von der Zufuhreinrichtung zugeführte Werkstücke wahlweise einer der Stapeleinrichtungen zuzuführen, aufweist. Auf diese Weise wird es möglich, die Fördergeschwindigkeit der Zufuhreinrichtung deutlich zu erhöhen und auch Stillstandszeiten der Umsetzeinrichtung zu vermindern oder zu beseitigen. Hierdurch ergibt sich insgesamt ein deutlich beschleunigter Betrieb der Gesamtvorrichtung mit entsprechend erhöhter Kapazität.

Die Verteilungseinrichtung kann im Rahmen der vorliegenden Erfindung auf unterschiedlichste Art und Weise ausgebildet sein. Eine besonders einfache Konstruktion ergibt sich jedoch, wenn gemäß einer Weiterbildung der Erfindung die Verteilungseinrichtung ein verschwenkbares und/oder verfahrbares Weichenelement aufweist. Dabei ist es besonders bevorzugt, dass das Weichenelement auch um eine im Wesentlichen horizontale Achse verschwenkbar ist. Hierdurch kommt der Verteilungseinrichtung nicht nur eine Verteilungsfunktion zu, sondern das Weichenelement kann bei jedem Verteilvorgang auf eine bestimmte Höhe geschwenkt werden, die der aktuellen Stapelhöhe entspricht, sodass gleichzeitig eine kontinuierliche Anpassung an den Stapelfortschritt erfolgt.

Alternativ oder zusätzlich weist die Verteilungseinrichtung gemäß einer Weiterbildung der Erfindung zumindest ein verschwenkbares und/oder verfahrbares Zwischenförderelement auf. Hierdurch werden die räumlichen Beschränkungen an die Anordnung der Verteilungsanordnung und der benachbarten Bauteile vermindert, während gleichzeitig neben einer Verteilungsfunktion auch eine Stapelanpassungsfunktion erfüllt werden kann, was anhand der unten stehenden ausführlichen Beschreibung noch besser ersichtlich werden wird.

Gemäß einer Weiterbildung der Erfindung ist vorgesehen, dass die Stapeleinrichtungen jeweils eine Anschlageinrichtung aufweisen. Hierdurch können die jeweiligen Werkstücke leicht in den Anschlageinrichtungen ausgerichtet und positioniert werden, sodass der Stapel in bereits ausgerichteter Weise leicht und sicher von der Umsetzeinrichtung aufgenommen und abgesetzt werden kann.

Im Rahmen der vorliegenden Erfindung ist es prinzipiell möglich, dass die Umsetzeinrichtung die jeweiligen gebildeten Stapel von oben her aufnimmt. Um jedoch ein einfaches und gleichzeitig stabiles Aufnehmnen der Stapel durch die Umsetzeinrichtung zu ermöglichen, ist gemäß einer Weiterbildung der Erfindung vorgesehen, dass die Stapeleinrichtungen jeweils eine Durchgreiföffnung für die Umsetzeinrichtung aufweisen. Auf diese Weise kann die Umsetzeinrichtung von unten her durch die Stapeleinrichtungen durchgreifen und den Stapel ebenfalls von unten her aufnehmen.

Die Umsetzeinrichtung kann im Rahmen der vorliegenden Erfindung auf unterschiedlichste Art und Weise ausgebildet sein und beispielsweise auch eine portal- oder auslegeartige Konstruktion aufweisen. Im Hinblick auf einen flexiblen Betrieb und einen variablen Arbeitsbereich hat es sich jedoch gemäß einer Weiterbildung der Erfindung als vorteilhaft erwiesen, dass die Umsetzeinrichtung durch mindestens einen Knickarmroboter gebildet ist.

Die oben diskutierten Vorteile lassen sich besonders ausgeprägt durch das in Anspruch 8 definierte Verfahren zum Ablegen von Werkstückstapeln auf eine Fördereinrichtung erzielen. Das Verfahren sieht eine weitgehende oder vollständige Parallelisierung des Umsetzvorganges und des Stapelvorganges vor, mit entsprechend erhöhter Kapazität des Verfahrens.

### Kurze Beschreibung der Zeichnung

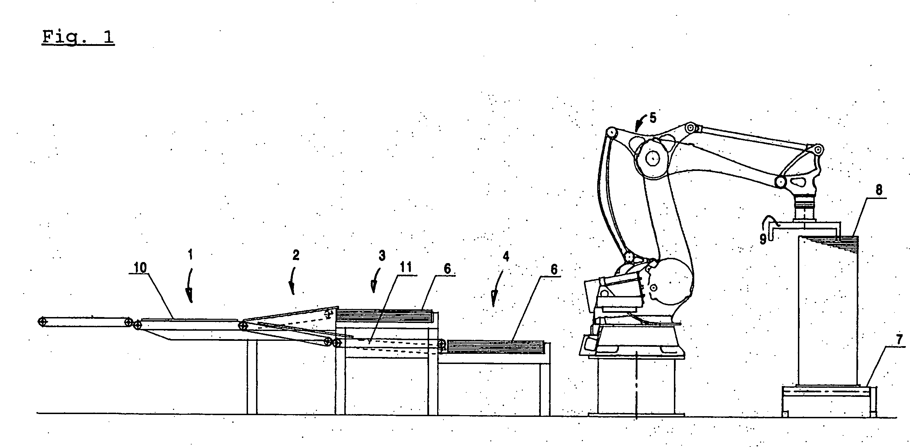

Fig. 1 zeigt schematisch eine Seitenansicht einer Ausführungsform der erfindungsgemäßen Vorrichtung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

Eine Vorrichtung V zum Ablegen von Werkstückstapeln 6 auf eine Fördereinrichtung 7 als bevorzugte Ausführungsform der vorliegenden Erfindung ist in Fig. 1 schematisch in einer Seitenansicht gezeigt. Die Vorrichtung V besitzt zunächst eine Zufuhreinrichtung 1 zum kontinuierlichen Zuführen von Werkstücken 10, die bevorzugt als Riemenförderer ausgebildet ist, jedoch auch eine andere geeignete Konstruktion besitzen kann. An die Zufuhreinrichtung 1 schließt sich eine Wippe 2 an, die durch Verschwenken um eine im Wesentlichen horizontale Achse wahlweise einer nachgelagerte Stapeleinrichtung 3 oder, über ein Zwischenförderelement 11, einer Stapeleinrichtung 4 zugewandt werden kann. Die beiden Stapeleinrichtungen 3, 4 dienen jeweils zum Bilden eines Werkstückstapels 6, der mindestens zwei übereinander gestapelte Werkstücke 1 aufweist, wobei beispielsweise die Geometrie und Dicke der Werkstücke sowie deren Stapelhöhe im Rahmen der vorliegenden Erfindung vielfältig variiert werden kann. Das Zwischenförderelement 11 ist wie die Wippe 2 um eine im Wesentlichen horizontale Achse verschwenkbar. Dabei weisen die Stapeleinrichtungen 3, 4 jeweils eine nicht näher gezeigte Anschlageinrichtung sowie jeweils eine nicht näher gezeigte Durchgreiföffnung für eine noch zu erläuternde Umsetzeinrichtung 5 auf.

Schließlich besitzt die Vorrichtung V eine Umsetzeinrichtung, die in der vorliegenden Ausführungsform als Knickarmroboter ausgebildet ist, und mit einem Greifer 9 auf in den Stapeleinrichtungen 3, 4 gebildete Werkstückstapel 6 zugreifen und diese auf einer Fördereinrichtung 7 ablegen kann.

Der Betrieb der erfindungsgemäßen Vorrichtung V vollzieht sich beispielsweise wie folgt. Plattenförmige Teile 10 werden über die Zuführeinrichtung 1 kontinuierlich der Wippe 2 zugeführt, die wahlweise durch Verschwenken auf das Niveau des obersten Werkstücks in dem Werkstückstapel 6 der Stapeleinrichtung 3 oder auf das Niveau des Zwischenförderelements 11 eingestellt wird, um die Werkstücke 1 der Stapeleinrichtung 3 bzw. 4 zuzuführen. Dabei befindet sich die Wippe 2 zu Beginn der Befüllung der Stapeleinrichtung 3 in einer unteren Ausgangslage, bei der das Transportniveau der Werkstücke gleich bzw. geringfügig höher ist als das Auflageniveau der Stapeleinrichtung 3. Die Wippe 2 wird nun während des Befüllens, entsprechend der frei wählbaren Teiledicke und Stapelhöhe, in Abhängigkeit von der für die Teile optimalen Fallkurve getaktet oder stufenlos angehoben.

Für die Befüllung der Stapeleinrichtung 4 wird die Wippe 2 auf die Übergabeposition zum Zwischenförderelement 11, das vorzugsweise ebenfalls als Riemenförderer ausgeführt ist, geschwenkt. Dieses Zwischenförderelement 11 befindet sich bei Beginn der Befüllung der Stapeleinrichtung 4 ebenfalls in einer unteren Ausgangslage, bei der das Transportniveau der Teile gleich bzw. geringfügig höher ist als das Auflageniveau der Stapeleinrichtung 4. Das Zwischenförderelement 11 wird nun während des Befüllens entsprechend der frei wählbaren Teiledicke und Stapelhöhe in Abhängigkeit von der für die Teile optimalen Fallkurve getaktet oder stufenlos angehoben.

Somit ergibt sich bei beiden Stapeleinrichtungen 3, 4 für den Roboter 5 unabhängig von der Stapelhöhe jeweils eine konstante Aufnahmehöhe des Greifwerkzeugs 9 für die Entnahme der Stapel 6 aus den Magazinen 3, 4. Dabei kann das Greifwerkzeug 9 durch die nicht näher gezeigte Durchgreiföffnung in der Stapeleinrichtung 3, 4 von unten her die Stapel 6 aufnehmen.

Nach dem Erreichen der gewünschten Stapelhöhe in der jeweiligen Stapeleinrichtung 3, 4 entnimmt der Roboter 5 mit seinem auf die Teileabmessungen gerüsteten Greifwerkzeug 9 den jeweiligen Stapel 6 und setzt ihn auf das nachfolgende Transportsystem 7 ab. Durch ein Übereinanderstapeln der aus den Stapeleinrichtungen 3,4 entnommenen Stapel 6 kann auf dem Transportsystem 7 ein zwischen der minimalen und maximalen Ablagehöhe vertikal wachsender Transportstapel entstehen.

## Patentansprüche

1. Vorrichtung (V) zum Ablegen von Werkstückstapeln (6) auf einer Fördereinrichtung (7), mit
einer Zufuhreinrichtung (1) zum bevorzugt kontinuierlichen Zuführen von Werkstücken (10),
mindestens zwei Stapeleinrichtungen (3, 4) jeweils zum Bilden eines Werkstückstapels (6), der mindestens zwei übereinander gestapelte Werkstücke aufweist,
einer Verteilungseinrichtung (2), die eingerichtet ist, von der Zufuhreinrichtung zugeführte Werkstücke wahlweise einer der Stapeleinrichtungen (3, 4) zuzuführen,
**dadurch gekennzeichnet, dass**
die Vorrichtung ferner eine Umsetzeinrichtung (5) zum Aufnehmen eines in einer Stapeleinrichtung gebildeten Werkstückstapels (6) und Absetzen des Werkstückstapels auf einer Fördereinrichtung (7) aufweist, und dass
die Stapeleinrichtungen (3, 4) derart angeordnet sind, dass die Umsetzeinrichtung (5) Werkstückstapel (6) aus diesen aufnehmen kann.

2. Vorrichtung nach Anspruch 1, **dadurch gekennzeichnet, dass** die Verteilungseinrichtung (2) ein verschwenkbares und/oder verfahrbares Weichenelement aufweist, das bevorzugt an die jeweilige Stapelhöhe und/oder Stapelposition angepasst werden kann.

3. Vorrichtung nach Anspruch 2, **dadurch gekennzeichnet, dass** das Weichenelement auch um eine im wesentlichen horizontale Achse verschwenkbar ist.

4. Vorrichtung nach einem der vorhergehenden Ansprüche, **dadurch gekennzeichnet, dass** die Verteilungseinrichtung (2) zumindest ein verschwenkbares und/oder verfahrbares Zwischenförderelement (11) aufweist, das bevorzugt an die jeweilige Stapelhöhe und/oder Stapelposition angepasst werden kann.

5. Vorrichtung nach einem der vorhergehenden Ansprüche, **dadurch gekennzeichnet, dass** die Stapeleinrichtungen (3, 4) jeweils eine Anschlageinrichtung aufweisen.

6. Vorrichtung nach einem der vorhergehenden Ansprüche, **dadurch gekennzeichnet, dass** die Stapeleinrichtungen (3, 4) jeweils eine Durchgreiföffnung für die Umsetzeinrichtung (5) aufweisen.

7. Vorrichtung nach einem der vorhergehenden Ansprüche, **dadurch gekennzeichnet, dass** die Umsetzeinrichtung (5) durch mindestens einen Knickarmroboter gebildet ist.

8. Verfahren zum Ablegen von Werkstückstapeln (6) auf einer Fördereinrichtung (7) unter Einsatz einer Vorrichtung nach einem der vorhergehenden Ansprüche, **dadurch gekennzeichnet, dass**
die Umsetzeinrichtung (5) einen in einer Stapeleinrichtung (3, 4) gebildeten Werkstückstapel (6) aufnimmt und den Werkstückstapel (6) auf einer Fördereinrichtung (7) absetzt,
und während dieses Vorgangs zumindest ein weiteres Werkstück, bevorzugt mehrer weitere Werkstücke, in eine andere der Stapeleinrichtungen (3, 4) zugeführt wird bzw. werden.

## Claims

1. Device (V) for depositing workpiece stacks (6) on a conveying device (7), having a feeding device (1) for preferably continuous feeding of workpieces (10), at least two stacking devices (3, 4) in each case for forming a workpiece stack (6) which has at least two workpieces stacked one above another, a distributing device (2) which is equipped to feed workpieces fed by the feeding device alternatively to one of the stacking devices (3,4), **characterised in that** the device also has a transfer device (5) for receiving a workpiece stack (6) formed in a stacking device and placing the workpiece stack on a conveying device (7), and **in that** the stacking devices (3, 4) are arranged such that the transfer device (5) may receive workpiece stacks (6) from the latter.

2. Device according to claim 1, **characterised in that** the distributing device (2) has a pivotable and/or movable switching element which may be adapted preferably to the particular stack height and/or stack position.

3. Device according to claim 2, **characterised in that** the switching element can also be pivoted about an essentially horizontal axis.

4. Device according to one of the preceding claims, **characterised in that** the distributing device (2) has at least one pivotable and/or movable intermediate conveying element (11) which may be adapted preferably to the particular stack height and/or stack position.

5. Device according to one of the preceding claims, **characterised in that** the stacking devices (3, 4) have in each case a stop device.

6. Device according to one of the preceding claims, **characterised in that** the stacking devices (3, 4) have in each case a reach-through opening for the transfer device (5).

7. Device according to one of the preceding claims, **characterised in that** the transfer device (5) is formed by at least one bent-arm robot.

8. Method for depositing workpiece stacks (6) on a conveying device (7) using a device according to one of the preceding claims, **characterised in that** the transfer device (5) receives a workpiece stack (6) formed in a stacking device (3,4) and places the workpiece stack (6) on a conveying device (7), and during this process, at least one further workpiece, preferably several further workpieces, is or are fed to another of the stacking devices (3, 4).

## Revendications

1. Appareil (V) pour la pose de piles d'articles (6) sur un transporteur (7), comprenant :
un dispositif alimentateur (1) pour l'alimentation, de préférence en continu, d'articles (10),
au moins deux dispositifs empileurs (3, 4), chacun pour former une pile d'articles (6), présentant au moins deux articles empilés les un au-dessus des autres,
un dispositif répartiteur (2), agencé pour amener, au choix, des articles amenés par le dispositif alimentateur, à l'un des dispositifs empileurs (3, 4),
**caractérisé en ce que**
le dispositif présente en outre un dispositif de transfert (5), pour recevoir une pile d'articles (6), formée dans un dispositif empileur, et déposer la pile d'articles sur un transporteur (7), et **en ce que**
les dispositifs empileurs (3, 4) sont disposés de manière que le dispositif de transfert (5) puisse recevoir des piles d'articles (6) provenant de ceux-ci.

2. Appareil selon la revendication 1, **caractérisé en ce que** le dispositif répartiteur (2) présente un élément d'aiguillage susceptible de pivoter et/ou susceptible de se déplacer en translation, pouvant être adapté de préférence à la hauteur de pile respective et/ou à la position de pile respective.

3. Appareil selon la revendication 2, **caractérisé en ce que** l'élément d'aiguillage est également susceptible de pivoter autour d'un axe sensiblement horizontal.

4. Appareil selon l'une des revendications précédentes, **caractérisé en ce que** le dispositif répartiteur (2) présente au moins un élément de transport intermédiaire (11), susceptible de pivoter et/ou susceptible de se déplacer en translation, pouvant être adapté de préférence à la hauteur de pile respective et/ou à la position de pile respective.

5. Appareil selon l'une des revendications précédentes, **caractérisé en ce que** les dispositifs empileurs (3, 4) présentent chacun un dispositif de butée.

6. Appareil selon l'une des revendications précédentes, **caractérisé en ce que** les dispositifs empileurs (3, 4) présentent chacun une ouverture de passage pour le dispositif de transfert (5).

7. Appareil selon l'une des revendications précédentes, **caractérisé en ce que** le dispositif de transfert (5) est formé par au moins un robot à bras articulé.

8. Procédé de pose de piles d'articles (6) sur un transporteur (7) avec utilisation d'un appareil selon l'une des revendications précédentes, **caractérisé en ce que**
le dispositif de transfert (5) reçoit une pile d'articles (6), formée dans un dispositif empileur (3, 4) et dépose la pile d'articles (6) sur un transporteur (7),
et, pendant ce processus, au moins un autre article, de préférence plusieurs autres articles, est ou sont amené(s) dans un autre des dispositifs empileurs (3, 4).
